# DEMANDE DE BREVET EUROPEEN

(11) **EP 1 852 636 A1**
(43) Date de publication de la demande: **07.11.2007**
(21) Numéro de dépôt: 07300981.3
(22) Date de dépôt: 25.04.2007
(51) Int. Cl.: F16H 61/32

(54) **Boîte de vitesses robotisée comprenant un organe de sélection ou d'engagement mobile héliocoïdalement**

(30) Priorité: 04.05.2006 WO PCT/FR2006/051610
(71) Demandeur: Peugeot Citroen Automobiles SA, 78140 Vélizy-Villacoublay (FR)
(72) Inventeur: Lalasseux, M. Xavier, 92150 Suresnes (FR)

(57) **Abrégé**

L'invention concerne une boîte de vitesses robotisée incluant un actionneur électrique.

La boîte de vitesses robotisée comprend un organe mobile (1) en translation par exemple pour engager un rapport, cet organe mobile (1) étant déplacé par un actionneur comprenant un moteur électrique. L'actionneur comprend une vis sans fin (3) entraînée par le moteur et engagée dans un écrou (4) pourvu d'un bras radial (6) lié en mouvement à l'organe mobile (1), et des moyens de guidage (11, 12) assujettissant l'écrou à des déplacements combinés de translation le long de la vis et de rotation autour de la vis.

L'invention s'applique aux boîtes de vitesses robotisées de véhicules automobiles.

## Description

L'invention concerne une boîte de vitesses robotisée, comprenant un actionneur destiné à déplacer un organe mobile en translation par exemple pour engager un rapport, cet actionneur comprenant un moteur électrique.

Dans une telle boîte de vitesses connue, l'actionneur qui est conçu pour déplacer l'organe mobile en translation comprend un système de transmission à plusieurs étages qui est interposé entre le moteur électrique et l'organe mobile.

Ce système de transmission comprend un premier étage de démultiplication de type roue et vis sans fin, puis un deuxième étage de démultiplication par pignons qui entraîne un renvoi par crémaillère pour déplacer l'organe mobile en translation, sur rotation du moteur.

La présence des deux étages de démultiplication est nécessaire pour assurer une démultiplication importante entre le mouvement du moteur et le mouvement de l'organe mobile, pour constituer un actionneur capable de déplacer l'organe mobile avec précision.

Cette grande quantité de parties mobiles introduit un jeu important entre les mouvements du moteur et ceux de l'organe mobile.

Ainsi, lorsque l'organe mobile est placé dans une position déterminée par l'actionneur, la présence de ce jeu important ne permet pas de le bloquer dans cette position avec suffisamment de précision. Ainsi, lorsque le moteur est bloqué, l'actionneur peut quand même être déplacé en translation sur une distance dépendant de ce jeu. Or, compte tenu des impératifs de fonctionnement d'une boîte de vitesses, on souhaite obtenir une précision de blocage élevée et si possible avec le minimum de jeu.

De plus, la grande quantité de composants de cet actionneur est la source d'un coût de fabrication et d'intégration élevés.

Le but de l'invention est de remédier à ces inconvénients en proposant une boîte de vitesses équipée d'un actionneur simple et précis.

A cet effet, l'invention a pour objet une boîte de vitesses robotisée, comprenant un organe mobile en translation par exemple pour engager ou sélectionner un rapport, cet organe mobile étant déplacé par un actionneur comprenant un moteur électrique, caractérisé en ce que l'actionneur comprend une vis sans fin entraînée par le moteur et engagée dans un écrou pourvu d'un bras radial lié en mouvement à l'organe mobile, et des moyens de guidage par lesquels les mouvements de l'écrou en translation et en rotation par rapport à un carter de la boîte de vitesses sont liés l'un à l'autre.

L'invention concerne également une boîte de vitesses telle que définie ci-dessus, dans laquelle les moyens de guidage assurent une liaison hélicoïdale entre l'écrou et le carter, cette liaison hélicoïdale ayant le même axe que la vis.

L'invention concerne également une boîte de vitesses telle que définie ci-dessus, dans laquelle l'organe est mobile en translation selon une direction normale à l'orientation de la vis.

L'invention concerne également une boîte de vitesses telle que définie ci-dessus, comprenant une fourchette portée par l'organe mobile, le bras radial de l'écrou étant engagé dans cette fourchette.

L'invention concerne également une boîte de vitesses telle que définie ci-dessus, dans laquelle les moyens de guidage incluent une rampe de guidage solidaire du carter et inclinée par rapport à la vis, et un doigt radial solidaire de l'écrou et engagé dans cette rampe.

L'invention concerne également une boîte de vitesses telle que définie ci-dessus, dans laquelle les moyens de guidage incluent une rampe de guidage réalisée à la surface périphérique de l'écrou et inclinée par rapport à la direction d'engagement de la vis dans l'écrou, et un doigt rigidement solidaire du carter et engagé dans la rampe de guidage.

L'invention concerne également une boîte de vitesses telle que définie ci-dessus, dans laquelle le bras radial a une longueur supérieure ou inférieure au doigt.

L'invention concerne également une boîte de vitesses telle que définie ci-dessus, dans laquelle la rampe est incurvée pour produire une démultiplication dont le pas dépend de la position occupée par l'écrou le long de la vis.

L'invention concerne également une boîte de vitesses telle que définie ci-dessus, dans laquelle la vis comprend un filet incliné d'un angle inférieur à l'angle du coefficient de frottement des matériaux de la vis et de l'écrou.

L'invention concerne également une boîte de vitesses telle que définie ci-dessus, comprenant une butée à bille pour immobiliser en translation la vis par rapport au carter.

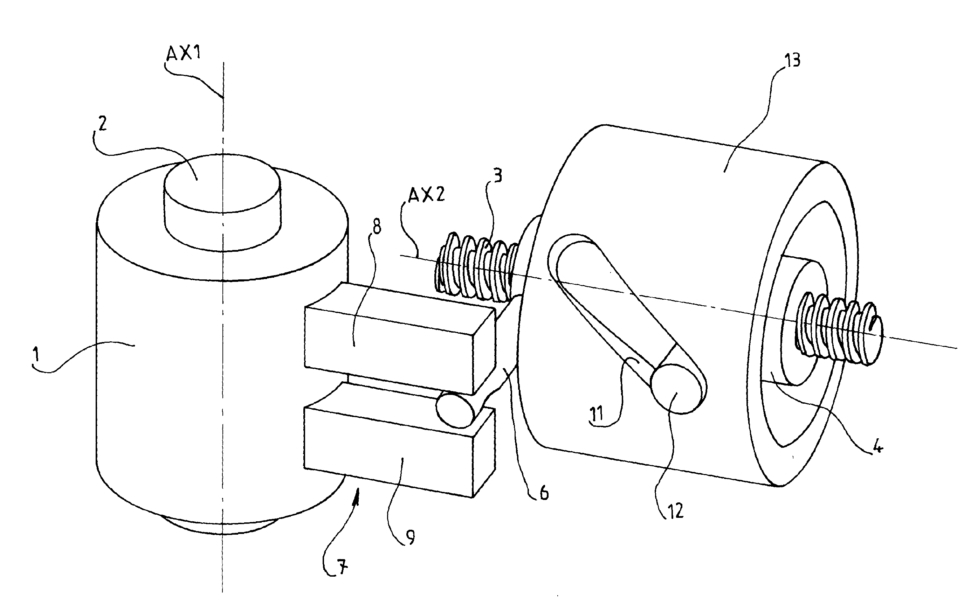

L'invention sera maintenant décrite plus en détail, et en référence à la figure unique qui en illustre un mode de réalisation.

La boîte de vitesses selon l'invention comprend un organe mobile en translation, repéré par 1, qui se présente sous forme d'une cage cylindrique coulissant le long d'une tige 2, cette tige étant rigidement solidaire d'une partie de carter non représentée.

Cet organe mobile 1 peut être assujetti à ne pas pivoter autour de la tige 2 qui le porte, par des moyens non représentés, de manière à ne pouvoir se déplacer qu'en translation le long d'un axe AX1 correspondant à l'axe de la tige 2.

Cet organe mobile 1 est lié en mouvement à d'autres éléments mobiles, tels qu'une fourchette, elle-même liée en mouvement à un synchroniseur, de sorte qu'un déplacement de cet organe mobile permet par exemple d'engager une vitesse.

Un déplacement de l'organe mobile 1 vers une première position le long de la tige permet par exemple d'engager un rapport de la boîte de vitesses, alors qu'un déplacement de cet organe vers une seconde position permet de désengager ce rapport pour en engager un autre.

Cet organe mobile 1 peut aussi être destiné à la sélection de rapports, en étant mobile entre différentes positions correspondant respectivement à la sélection du premier ou second rapport, et à la sélection du troisième ou quatrième rapport.

Cet organe mobile 1 est déplacé le long de la tige 2 par un actionneur comprenant une vis sans fin 3 orientée selon un autre axe, AX2, qui est normal à l'axe AX1 de déplacement de cet organe mobile 1.

Cette vis sans fin 3 est entraînée en rotation par un moteur électrique non représenté, et elle est immobilisée en translation par rapport au carter, par exemple au moyen d'une butée à billes.

Cette vis 3 est engagée dans un écrou 4 comprenant un bras radial 6 lié en mouvement avec l'organe mobile 1. A cet effet, l'organe mobile 1 est pourvu d'une fourchette 7 constituée de deux bras radiaux 8 et 9 parallèles l'un à l'autre, en s'étendant chacun parallèlement à l'axe AX2. Ces deux bras sont espacés l'un de l'autre le long du premier axe AX1 par une distance suffisante pour permettre l'engagement de l'extrémité libre du bras radial 6 dans la fourchette qu'ils forment.

Cette fourchette 7 a d'autre part une longueur coïncidant sensiblement avec la longueur maximale de déplacement de l'écrou 4 le long de la vis 3. Avec cette disposition, comme visible dans la figure, un mouvement de rotation de l'écrou 4 autour de la vis 3 se traduit par un déplacement de l'organe mobile 1 le long de la tige 2.

Le système de démultiplication du mouvement du moteur comprend l'écrou 4 et la vis 3 ainsi que des moyens de guidage des mouvements possibles de cet écrou. Ces moyens de guidage assurent qu'un déplacement en translation de cet écrou par rapport au carter n'est possible qu'avec une rotation correspondante de l'écrou par rapport au carter.

Grâce à ces moyens de guidage de l'écrou, un rapport de démultiplication élevé peut être atteint sans avoir à recourir à des éléments mobiles additionnels.

Dans l'exemple illustré sur la figure unique, ces moyens de guidage comprennent principalement une rampe 11 solidaire du carter de boîte de vitesses, dans laquelle est engagé un doigt radial 12 qui est rigidement solidaire de l'écrou 4.

Comme visible sur la figure la rampe de guidage 11 est portée par un fourreau 13 rigidement solidaire du carter. Cette rampe 11 est inclinée par rapport à l'axe AX2, de telle sorte que lorsque la vis tourne pour déplacer l'écrou 4 en translation le long de l'axe AX2, celui-ci doit pivoter autour de l'axe AX2 pour que cette translation soit possible.

Ainsi, lorsque la vis 3 est mise en rotation par le moteur, elle provoque une translation et une rotation de l'écrou 4. La présence du bras radial 6 engagé dans la fourchette 7 permet de convertir cette rotation du bras radial 6 autour de l'axe AX2 en un mouvement de translation de l'organe mobile 1 le long de la tige 2.

Dans l'exemple illustré sur la figure unique, l'axe AX2 de la vis 3 est normal à l'axe AX1 de la direction de déplacement de l'organe mobile 1, de sorte que c'est la composante en rotation du mouvement du bras 6 qui est liée à la translation de l'organe mobile 1. La composante en translation du mouvement de l'écrou 4 le long de l'axe AX2 est en soi sans effet sur la translation de l'organe mobile 1 le long de l'axe AX1.

Avec cette disposition, la démultiplication du mouvement de rotation est très importante sans qu'il soit nécessaire de recourir à un étage supplémentaire.

Par exemple, dans le cas illustré sur la figure, la rampe 11 qui est inclinée par rapport à l'axe AX2 s'étend sur un quart de tour environ, et sur une longueur donnée. Ainsi, l'écrou tourne d'environ un quart de tour lorsque la vis sans fin a effectué un nombre de tours suffisant pour le déplacer en translation sur une distance correspondant à la longueur donnée.

La longueur donnée peut par exemple être augmentée, ce qui revient à diminuer l'inclinaison de la rampe 11 par rapport à l'axe AX2, pour augmenter le rapport de démultiplication.

Comme visible dans la figure, la longueur du bras radial 6 étant indépendante de celle du doigt de guidage 12, la longueur de ce bras peut elle aussi être modifiée pour modifier le rapport de démultiplication de l'actionneur.

L'actionneur peut également être conçu avec un unique appendice radial rigidement solidaire de l'écrou et assurant à la fois la fonction de doigt de guidage et de bras radial pour déplacer l'organe mobile. Dans ce cas, cet appendice traverse la rampe 11 pour être guidé par celle-ci, et son extrémité est engagée dans la fourchette 7.

Dans l'exemple illustré sur la figure, la rampe 11 est portée par le fourreau 13 qui est rigidement solidaire du carter, et le doigt 12 est porté par l'écrou 4. Mais il est également possible de prévoir une architecture dans laquelle l'écrou porte une rampe réalisée à sa surface périphérique, et dans laquelle le doigt de guidage est fixe en étant rigidement solidaire du fourreau 13, c'est-à-dire du carter.

D'autre part, la rampe 11 qui a une forme rectiligne dans l'exemple des figures peut aussi avoir une forme incurvée, pour obtenir une démultiplication dont le pas dépend de la position occupée par l'écrou 4 le long de la vis 3.

Le mouvement peut ainsi par exemple être plus rapide en début de déplacement de l'organe mobile 1 et plus lent en fin de déplacement de cet organe mobile. L'effort transmis à l'organe mobile 1 est alors plus important en fin de déplacement, par exemple pour faciliter l'engagement d'un rapport de la boîte de vitesses.

Avantageusement, la rampe 11 est inclinée par rapport à l'axe AX2 dans un sens opposé au sens d'inclinaison des filets de la vis sans fin 3, ce qui permet d'améliorer le rendement du dispositif en minimisant les efforts de frottement mis en jeu.

L'angle de la démultiplication vis-écrou peut être choisi de manière à avoir soit un système irréversible pour cela, en choisissant un angle de filet de la vis inférieur à l'angle du coefficient de frottement des matériaux constitutifs de la vis et de l'écrou.

Grâce à l'invention, le mouvement de rotation du moteur est transformé en une translation de l'organe mobile avec une démultiplication importante et un rendement élevé, notamment grâce au faible nombre de pièces mobiles mises en jeu.

## Revendications

1. Boîte de vitesses robotisée, comprenant un organe mobile (1) en translation, par exemple pour engager ou sélectionner un rapport, cet organe mobile (1) étant déplacé par un actionneur comprenant un moteur électrique, **caractérisé en ce que** l'actionneur comprend une vis sans fin (3) entraînée par le moteur et engagée dans un écrou (4) pourvu d'un bras radial (6) lié en mouvement à l'organe mobile (1), et des moyens de guidage (11, 12) par lesquels les mouvements de l'écrou (4) en translation et en rotation par rapport à un carter (13) de la boîte de vitesses sont liés l'un à l'autre.

2. Boîte de vitesses selon la revendication 1, dans laquelle les moyens de guidage (11, 12) assurent une liaison hélicoïdale entre l'écrou (4) et le carter (13), cette liaison hélicoïdale ayant le même axe (AX2) que la vis (3).

3. Boîte de vitesses selon la revendication 1 ou 2, dans laquelle l'organe (1) est mobile en translation selon une direction (AX1) normale à l'orientation (AX2) de la vis (3).

4. Boîte de vitesses selon l'une des revendications 1 à 3, comprenant une fourchette (7) portée par l'organe mobile (1), le bras radial (6) de l'écrou (4) étant engagé dans cette fourchette (7).

5. Boîte de vitesses selon l'une des revendications 1 à 4, dans laquelle les moyens de guidage incluent une rampe de guidage (11) solidaire du carter (13) et inclinée par rapport à la vis (3), et un doigt radial (12) solidaire de l'écrou (4) et engagé dans cette rampe (11).

6. Boîte de vitesses selon l'une des revendications 1 à 4, dans laquelle les moyens de guidage incluent une rampe de guidage réalisée à la surface périphérique de l'écrou (4) et inclinée par rapport à la direction d'engagement de la vis (3) dans l'écrou (4), et un doigt rigidement solidaire du carter (13) et engagé dans la rampe de guidage.

7. Boîte de vitesses selon l'une des revendications 5 ou 6, dans laquelle le bras radial (6) a une longueur supérieure ou inférieure au doigt (12).

8. Boîte de vitesses selon l'une des revendications 5 à 7, dans laquelle la rampe (11) est incurvée pour produire une démultiplication dont le pas dépend de la position occupée par l'écrou (4) le long de la vis.

9. Boîte de vitesses selon l'une des revendications précédentes, dans laquelle la vis (3) comprend un filet incliné d'un angle inférieur à l'angle du coefficient de frottement des matériaux de la vis (3) et de l'écrou (4).

10. Boîte de vitesses selon l'une des revendications précédentes, comprenant une butée à bille pour immobiliser en translation la vis (3) par rapport au carter.
